# EUROPÄISCHE PATENTSCHRIFT

(11) **EP 2 930 212 B1**
(45) Veröffentlichungstag und Bekanntmachung des Hinweises auf die Patenterteilung: **10.04.2019**
(21) Anmeldenummer: 15155617.2
(22) Anmeldetag: 18.02.2015
(51) Int. Cl.: C08L 77/00, C08L 71/12, C08K 7/06, C08K 3/00, C08K 3/04

(54) **Elektrisch leitfähige Polyamid-Formmassen**
Electrically conductive polyamide moulding compositions
Masse de formage en polyamide électro-conductrice

(30) Priorität: 08.04.2014 CH 5432014
(43) Veröffentlichungstag der Anmeldung: 14.10.2015
(73) Patentinhaber: EMS-PATENT AG, 7013 Domat / Ems (CH)
(72) Erfinder: Aepli, Etienne, 7013 Domat / Ems (CH); Dübon, Pierre, 7000 Chur (CH)
(74) Vertreter: OK pat AG

(56) Entgegenhaltungen:
- EP-A1- 2 463 341
- WO-A1-01/36536
- WO-A1-2010/128013
- US-A1- 2006 122 310

## Beschreibung

Die vorliegende Erfindung betrifft elektrisch leitfähige Polyamid-Formmassen, aus diesen Formmassen hergestellte Formkörper, sowie die Verwendung von partikulären Füllstoffen zur Erhöhung der elektrischen Leitfähigkeit von Kohlenstofffasern enthaltenden Polyamid-Formmassen.

Neben ihrer guten thermischen und elektrischen Leitfähigkeit zeichnen sich Kohlenstofffasern (auch Carbonfasern oder seltener Kohlefasern genannt) vor allem durch ihr geringes Gewicht aus. Kohlenstofffasern haben üblicherweise einen Durchmesser im Bereich von 2 bis 10 µm und werden meist auf der Basis von Polyacrylnitril (PAN) hergestellt. Kohlenstofffaser-verstärkte Kunststoffe (auch bekannt unter der Abkürzung CFK) finden wegen des erwähnten geringen Gewichts und wegen ihrer hervorragenden mechanischen Eigenschaften Einsatz im Leichtbau, wie z.B. für die Luft- und Raumfahrt oder für Sportgeräte.

Durch ihre gute elektrische Leitfähigkeit sind CFK unter anderem für Anwendungen geeignet, bei denen antistatische Eigenschaften eine Rolle spielen. Auch bei der elektrostatischen Lackierung können CFK vorteilhaft verwendet werden. Bei der letztgenannten Anwendung werden auch hohe Anforderungen an die Oberflächenqualität der Formteile gestellt. Auf Grund des hohen Preises von Kohlenstofffasern besteht das Bestreben, die für die jeweilige Anwendung geforderte elektrostatische Leitfähigkeit mit möglichst geringen Anteilen an Kohlenstofffasern zu erreichen.

WO 2010/128013 A1 hat sich zum Ziel gesetzt, elektrisch leitfähige Polyamid-Formmassen bereitzustellen, deren elektrische Leitfähigkeit nahezu unabhängig von der Wasseraufnahme ist. Als Lösung für die gestellte Aufgabe wird eine Formmasse aus einem thermoplastischen Polyamid, einem Polymerisat des Propylens, einem speziellen Verträglichkeitsvermittler und einem Leitfähigkeitsadditiv aus der Reihe Kohlenstofffasern und Carbon Nanotubes offenbart. Die Aufgabe des Polymerisats des Propylens besteht darin, die Wasseraufnahme der Formmasse herabzusetzen. Der Verträglichkeitsvermittler stellt dabei die Kompatibilität zwischen Polyolefin und Polyamid her.

US 2003/0134963 A1 betrifft eine elektrische leitfähige Harzzusammensetzung welche ein Polyamid, einen Polyphenylenether (PPE), einen Schlagzähmodifikator und einen elektrischen leitfähigen Füllstoff umfasst. Als elektrisch leitfähige Füllstoffe werden Leitrusse, Kohlenstoffnanoröhrchen und Kohlenstoffnanofasern offenbart. In den Beispielen werden neben einem speziellen Leitruss auch Kohlenstoffnanoröhrchen gearbeitet.

US 2006/0124906 A1 offenbart eine auf Polyamid basierende Zusammensetzung, die elektrische leitfähige Füllstoffe umfasst. Diese Formmassen sind unter anderem für elektrostatische Lackierprozesse geeignet. Als elektrisch leitfähige Füllstoffe werden unter anderem Kohlenstofffasern offenbart; in den Beispielen wird ein spezieller Leitruss gearbeitet.

In der EP 0 877 049 A1 wird ein elektrostatisch beschichteter Polyamidwerkstoff beschrieben. Für den Polyamidwerkstoff wird eine Zusammensetzung offenbart, die 25-90 Gew.-% Polyamid, 5-50 Gew.-% eines mineralischen Füllstoffs und 0,1-25 Gew.-% Russ und/oder Kohlefaser enthält. Der Zusatz des mineralischen Füllstoffs sorgt für eine gleichmässige Ladungsverteilung im Werkstoff, was zu verbesserter, gleichmässiger Lackanhaftung führt. Neben dem bevorzugten kugelförmigen Keramikmaterial werden als mineralische Füllstoffe unter anderem Kaolin, Calciumcarbonat, Calcium- und Bariumsulfat sowie Ton und Glimmer vorgeschlagen.

In der EP 2 463 341 A1 wird eine elektrisch leitfähige Kunststoff-Formmasse beschrieben, die ein Polyamid, einen Polyphenylenether und eine feine Kohlenstofffaser enthält. Die Formmasse kann zusätzliche Komponenten wie Bariumsulfat, Calciumcarbonat, Tonmineralien, Talk, etc. enthalten. Bei den hier beschriebenen feinen Kohlenstofffasern handelt es sich nicht um zylindrische Gebilde, sondern um Agglomerate aus in axialer Richtung übereinander gestapelten, tempelglockenförmigen Kohlenstoff-Kristallen mit sich überlappenden Gitterebenen. Der Leitfähigkeitsmechanismus dieser longitudinal agglomerierten Kristallstruktur ist nicht mit anderen Carbonfibrillen oder mit regulären Kohlenstofffasern vergleichbar, sondern im Bereich der sich überlappenden Enden erfolgt die elektrische Leitung über die Oberfläche und den Tunneleffekt. Die feinen Kohlenstofffasern mit der speziellen Struktur von EP 2 463 341 A1 haben einen Aussendurchmesser von 5 bis 40 nm.

US 2006/0122310 A1 beschreibt leitfähige Polyarylenether-Polyamid-Blends, die für das elektrostatische Lackieren geeignet sind und eine hohe Oberflächenqualität aufweisen. Ton (clay) inklusive Kaolin und Aluminiumsilikate sind bevorzugte Zusatzstoffe. Die Leitfähigkeitsmittel sind ausgewählt aus Leitruss und/oder Carbonfibrillen. Bei diesen Carbonfibrillen handelt es sich um Kohlenstoff-Nanoröhrchen (Carbon Nanotubes) mit einem Aussendurchmesser bis 75 nm. Deren Mengenanteil beträgt 0.1 bis 3 Gew.-%.

In der WO 01/36536 A1 geht es um leitfähige Polyphenylenether-Polyamid-Blends mit Carbonfibrillen. Dieselben Carbonfibrillen (Carbon Nanotubes) wie in US 2006/ 0122310 A1 werden verwendet, und als Bezugsquelle wird ebenfalls Hyperion genannt. Der Gehalt der Carbonfibrillen in der Formmasse wird mit 0.4 bis 3.0 Gewichtsprozent (Gew.-%) angegeben.

Es ergab sich als Aufgabe der vorliegenden Erfindung, Kohlenstofffaser-verstärkte Polyamid-Formmassen mit einem Kohlenstofffaser-Durchmesser im üblichen Bereich bereitzustellen, die eine hohe elektrische Leitfähigkeit, bzw. einen tiefen elektrischen Widerstand, aufweisen. Weiterhin bestand die Aufgabe darin, Polyamid-Formmassen bereitzustellen, aus denen Polyamid-Formkörper mit glatter Oberfläche (hohem Glanz) hergestellt werden können. Des Weiteren sollen Formkörper aus den erfindungsgemässen Formmassen sehr gute mechanische Eigenschaften aufweisen.

Diese Aufgabe wird gemäss der vorliegenden Erfindung durch eine Polyamid-Formmasse mit folgender Zusammensetzung gelöst:
(a) 20 bis 85 Gew.-% mindestens eines teilkristallinen Polyamids,
(b) 4 bis 18 Gew.-% Kohlenstofffasern mit einem Faser-Durchmesser im Bereich von 2 bis 10 µm,
(c) 10 bis 60 Gew.-% mindestens eines partikelförmigen mineralischen oder salzartigen Füllstoffs,
(d) 3 bis 30 Gew.-% mindestens eines amorphen Polymers mit einer nach ISO 11357 bestimmten Glasübergangstemperatur von mindestens 45°C; falls das mindestens eine amorphe Polymer Polyphenylenether umfasst, enthält die Polyamid-Formmasse 5 bis 9 Gew.-% Polyphenylenether,
(e) 0 bis 20 Gew.-% Russ,
(f) 0 bis 20 Gew.-% mindestens eines weiteren Additivs und/oder Zusatzstoffs, wobei sich die Komponenten (a) bis (f) in ihrer Summe auf 100 Gew.-% ergänzen.

Bevorzugte Ausführungsformen der erfindungsgemässen Polyamid-Formmasse ergeben sich aus den abhängigen Ansprüchen. Zudem werden Polyamid-Formkörper beansprucht, welche zumindest bereichsweise aus einer erfindungsgemässen Polyamid-Formmasse bestehen. Überdies wird eine Verwendung von partikelförmigen mineralischen oder salzartigen Füllstoffen bei kohlenstofffaserhaltigen Polyamid-Formmassen beansprucht.

An dieser Stelle soll die Anmerkung gemacht werden, dass der Begriff "Polyamid" (Abkürzung PA) ein Oberbegriff ist, der Homopolyamide und Copolyamide sowie Mischungen davon umfasst. Die Schreibweisen und Abkürzungen für Polyamide und deren Monomere sind in der ISO-Norm 1874-1:1992(E) festgelegt.

Das mindestens eine teilkristalline Polyamid (a) ist bevorzugt ein aliphatisches, insbesondere ein linear-aliphatisches, oder ein teilaromatisches Polyamid.

Besonders bevorzugte teilkristalline Polyamide (a) sind ausgewählt aus der Gruppe bestehend aus PA 46, PA 6, PA 66, PA 11, PA 12, PA 610, PA 1212, PA 1010, PA 10/11, PA 10/12, PA 11/12, PA 6/10, PA 6/12, PA 6/9, PA 8/10, PA 612, PA 614, PA 66/6, teilkristallinem PA 4T/4I, teilkristallinem PA 4T/6I, teilkristallinem PA 5T/5I, teilkristallinem PA 6T/6I, teilkristallinem PA 6T/6I/6, PA 6T/66, PA 6T/610, PA 10T/106, PA 6T/612, PA 6T/10T, teilkristallinem PA 6T/10I, PA 9T, PA 10T, PA 12T, teilkristallinem PA 10T/10I, PA10T/12, PA10T/11, PA 6T/9T, PA 6T/12T, teilkristallinem PA 6T/10T/6I, teilkristallinem PA 6T/6I/6, teilkristallinem PA 6T/6I/12, PA 10T/612, PA 10T/610, und/oder Gemische, Blends oder Legierungen aus diesen Polyamiden, wobei PA 66 und PA 612 ganz besonders bevorzugt sind.

In einer bevorzugten Ausführungsform ist das mindestens eine teilkristalline Polyamid (a) zu 25 bis 50 Gew.-%, besonders bevorzugt zu 27 bis 45 Gew.-% und ganz besonders bevorzugt zu 30 bis 40 Gew.-% in der Polyamid-Formmasse enthalten. Die erfindungsgemässe Polyamid-Formmasse enthält 4 bis 18 Gew.-% und bevorzugt 5 bis 16 Gew.-% Kohlenstofffasern (b).

Werden höhere Mengen der Kohlenstofffasern verwendet, so wird die Formmasse sehr teuer, und zudem kann sich die Oberflächenqualität verschlechtern. Ausserdem werden die Materialien bei höheren Kohlefaseranteilen spröde, ohne dass sich die elektrischen Eigenschaften weiter verbessern. Bei geringeren Mengen an Kohlenstofffasern werden hingegen die elektrischen und die mechanischen Eigenschaften der Formmasse schlecht.

Des Weiteren ist für eine erfindungsgemässe Polyamid-Formmasse bevorzugt, wenn die eingesetzten Kohlenstofffasern (b) eine durchschnittliche Länge im Bereich zwischen 100 und 15000 µm aufweisen. Nach der Compoundierung beträgt die Faserlänge im Granulat üblicherweise zwischen 100 und 500 µm und im fertigen Bauteil üblicherweise zwischen 100 und 400 µm. Werden Pultrusionsverfahren angewendet, entspricht die Faserlänge im Granulat der Länge des Granulats. Der Durchmesser der Kohlenstofffasern liegt im Bereich von 2 bis 10 µm und bevorzugt im Bereich von 3 bis 9 µm. Die Kohlenstofffasern (b) sind vorzugsweise von zylindrischer Gestalt.

Es können sowohl beschichtete als auch unbeschichtete Kohlenstofffasern verwendet werden. Es kann ein einziger Typ von Kohlenstofffasern, oder es können auch Mischungen von zwei oder mehr Kohlenstofffaser-Typen eingesetzt werden.

In einer besonderen Ausführungsform ist die Polyamid-Formmasse vollkommen frei von anderen faserförmigen Verstärkungsstoffen als den Kohlenstofffasern.

Die partikelförmigen mineralischen oder salzartigen Füllstoffe (c) sind bevorzugt ausgewählt aus der Gruppe bestehend aus Calciumcarbonat, Magnesiumcarbonat, Dolomit, Calciumhydroxid, Magnesiumhydroxid, Calciumsulfat, Bariumsulfat, Baryt, Calciumsilikaten, Aluminiumsilikaten, Kaolin, Kreide, Glimmer, Schichtsilikaten, Talk, Ton und/oder Mischungen dieser Füllstoffe, wobei Calciumcarbonat besonders bevorzugt ist.

Der durchschnittliche Durchmesser der partikelförmigen mineralischen oder salzartigen Füllstoffe (c) liegt üblicherweise im Bereich von 0.01 bis 100 µm, bevorzugt im Bereich von 0.05 bis 25 µm und besonders bevorzugt im Bereich von 0.06 bis 5 µm. Die partikelförmigen mineralischen oder salzartigen Füllstoffe (c) können je nach Struktur oder Partikelgrösse auch einen Einfluss auf den Oberflächen-Glanz der aus der erfindungsgemässen Polyamid-Formmasse hergestellten Formkörper haben.

Der partikelförmige mineralische oder salzartige Füllstoff (c) ist bevorzugt zu 15 bis 55 Gew.-%, besonders bevorzugt zu 20 bis 50 Gew.-% und ganz besonders bevorzugt zu 35 bis 45 Gew.-% in der Polyamid-Formmasse enthalten. Werden höhere Mengen des Füllstoffs (c) verwendet, so werden die mechanischen Eigenschaften der Formmasse schlecht, bzw. entsprechende Formteile werden sehr brüchig. Bei geringeren Mengen hingegen werden die elektrischen Eigenschaften der Formmasse verschlechtert.

Das mindestens eine amorphe Polymer (d) ist bevorzugt ausgewählt aus der Gruppe bestehend aus amorphen Polyamiden und Polyphenylenethern.

Das mindestens eine amorphe Polymer (d) ist besonders bevorzugt ausgewählt aus der Gruppe bestehend aus PA 6I, PA 10I, Copolyamiden 6I/6T mit einem Molverhältnis von Isophthalsäure zu Terephthalsäure zwischen 1:0 und 3:2, Copolyamiden 10I/10T mit einem Molverhältnis von Isophthalsäure zu Terephthalsäure zwischen 1:0 und 3:2, Polyphenylenether, insbesondere Poly(2,6-diethyl-1,4-phenylen)ether, Poly(2-methyl-6-ethyl-1,4-phenylen)ether, Poly(2-methyl-6-propyl-1,4-phenylen) ether, Poly(2,6-dipropyl-1,4-phenylen)ether, Poly(2-ethyl-6-propyl-1,4-phenylen) ether, Polyphenylenether-Copolymere die 2,3,6-Trimethylphenol enthalten, gepfropfte Varianten (bevorzugt gepfropft mit Maleinsäureanhydrid, abgekürzt MAH) der vorangehend genannten Polyphenylenether, ausserdem Mischungen der genannten Polyphenylenether, und/oder Mischungen aus den genannten amorphen Polymeren, wobei ein Copolyamid 6I/6T mit einem Molverhältnis von Isophthalsäure zu Terephthalsäure von 2:1 besonders bevorzugt ist. Der Ausdruck "Mischungen" im Zusammenhang mit der Komponente (d) bedeutet, dass in einem solchen Fall zwei oder mehr amorphe Polymere (d) in der erfindungsgemässen Polyamid-Formmasse enthalten sind. Diese können bei der Herstellung der Polyamid-Formmasse separat in eine Compoundiermaschine zugegeben werden und müssen nicht vorgemischt sein.

In einer besonderen Ausführungsform ist das mindestens eine amorphe Polymer (d) eine Mischung eines amorphen Polyamids mit einem Polyphenylenether. Polyphenylenether können entweder allein oder als Blend mit einem anderen Polymer in eine Compoundiermaschine zur Herstellung der erfindungsgemässen Polyamid-Formmasse zugegeben werden. In einer bevorzugten Variante ist der Blend eine Mischung mit einem Polyamid. Besonders bevorzugt ist das Polyamid des Blends ein teilkristallines Polyamid, ganz besonders bevorzugt von demselben Typ wie die Komponente (a) der erfindungsgemässen Polyamid-Formmasse.

Weiterhin weist das mindestens eine amorphe Polymer (d) eine gemäss ISO 11357 bestimmte Glasübergangstemperatur von bevorzugt 50°C bis 280°C, besonders bevorzugt von 60°C bis 250°C und ganz besonders bevorzugt von 75°C bis 220°C auf.

Das mindestens eine amorphe Polymer (d) ist bevorzugt zu 5 bis 27 Gew.-%, besonders bevorzugt zu 8 bis 20 Gew.-% und ganz besonders bevorzugt zu 7 bis 17 Gew.-% in der Polyamid-Formmasse enthalten.

Umfasst das mindestens eine amorphe Polymer (d) Polyphenylenether, so enthält die Polyamid-Formmasse 5 bis 9 Gew.-% Polyphenylenether. In bevorzugten Ausführungsformen ist die Polyamid-Formmasse frei von Polyphenylenether.

In einer weiteren bevorzugten Ausführungsform enthält die erfindungsgemässe Polyamid-Formmasse Russ (e) in einem Anteil von 1 bis 15 Gew.-%, besonders bevorzugt von 2 bis 12 Gew.-% und ganz besonders bevorzugt von 3 bis 8 Gew.-%. Bevorzugte Russe sind ausgewählt aus den kommerziell verfügbaren Handelsprodukten wie Ketjenblack®, Ensaco®, BASIONICS VS03, BASIONICS LQ01, Vulcan P, Vulcan XC-72, Black Pearls 2000, etc. Es kann ein einziger Typ von Russ, oder es können auch Mischungen von zwei oder mehr Russ-Typen eingesetzt werden.

Die erfindungsgemässe Polyamid-Formmasse enthält in einer bevorzugten Ausführungsform mindestens ein weiteres Additiv und/oder mindestens einen weiteren Zusatzstoff (f) ausgewählt aus der Gruppe bestehend aus UV-Absorbern, UV-Stabilisatoren, Hitzestabilisatoren, Hydrolysestabilisatoren, Vernetzungsaktivatoren, Vernetzungsmitteln, Flammschutzmitteln, Farbmitteln, Haftvermittlern, Verträglichkeitsvermittlern, Gleitmitteln, Glasfasern, Gleit- und Entformungshilfsmitteln, anorganischen Pigmenten, organischen Pigmenten, IR-Absorbern, Antistatika, Antiblockmitteln, Nukleierungsmitteln, Kristallisationsbeschleunigern, Kristallisationsverzögerern, kettenverlängernden Additiven, optischen Aufhellern, photochromen Additiven, Schlagzähigkeitsmodifikatoren, wobei als Schlagzähigkeitsmodifikatoren Maleinsäureanhydrid-modifizierte Olefin-Copolymere und/oder Mischungen davon bevorzugt sind.

Beispiele für bevorzugte Schlagzähigkeitsmodifikatoren sind die kommerziell erhältlichen:
- TAFMER MC201: g-MAH (-0.6 %) Blend aus 67% EP-Copolymer (20 mol% Propylen) + 33% EB-Copolymer (15mol-% Buten-1); Mitsui Chemicals, Japan.
- TAFMER MH5010: g-MAH (-0.6 %) Ethylen-Butylen-Copolymer; Mitsui.
- TAFMER MH7010: g-MAH (-0.7 %) Ethylene-Butylen-Copolymer; Mitsui.
- TAFMER MH7020: g-MAH (-0.7 %) EP-Copolymer, Mitsui.
- EXXELOR VA1801: g-MAH (-0.7 %) EP-Copolymer; Exxon Mobile Chemical, US.
- EXXELOR VA1803: g-MAH (0.5-0.9 %) EP-Copolymer, amorph, Exxon.
- EXXELOR VA1810: g-MAH (-0.5 %) EP-Copolymer, Exxon.
- EXXELOR MDEX 94-1 1: g-MAH (0.7 %) EPDM, Exxon.
- FUSABOND MN493D: g-MAH (-0.5 %) Ethylen-Octen-Copolymer, DuPont, US.
- FUSABOND A EB560D (g-MAH) Ethylen-n-butyl-acrylat-Copolymer, DuPont.
- ELVALOY, DuPont.
- Lotader AX 8840, Arkema, FR.
- Bondyram, IL.

In bevorzugten Ausführungsformen ist die Polyamid-Formmasse frei von Gleitmitteln und/oder frei von Verträglichkeitsvermittlern.

Die weiteren Additive und/oder Zusatzstoffe (f) sind in der Polyamid-Formmasse bevorzugt zu 0.1 bis 15 Gew.-%, besonders bevorzugt zu 0.2 bis 10 Gew.-% und ganz besonders bevorzugt zu 0.25 bis 5 Gew.-% enthalten.

Bevorzugt weist eine erfindungsgemässe Kunststoff-Formmasse einen spezifischen Oberflächenwiderstand von 1*10⁻¹ bis 1*10⁴, besonders bevorzugt von 1 bis 1*10³ und ganz besonders bevorzugt 1*10¹ bis 9*10² Ohm auf. Der spezifische Volumenwiderstand einer erfindungsgemässen Kunststoff-Formmasse beträgt bevorzugt 1*10⁻² bis 1*10³, besonders bevorzugt 1*10⁻¹ bis 1*10² und ganz besonders bevorzugt 1 bis 5*10¹ Ohm*m.

Bevorzugte Glanzwerte betragen mindestens 80, besonders bevorzugt mindestens 90, gemessen nach der weiter hinten angegebenen Methode. Eine überraschende Erkenntnis der Erfinder ist, dass ein wichtiger Einflussfaktor zum Erreichen solch hoher Glanzwerte der Zusatz eines amorphen Polymers (d) mit einer Glasübergangstemperatur von mindestens 45°C zu einem teilkristallinen Polyamid ist.

Bevorzugte mechanische Eigenschaften betreffen Mindestwerte für die Schlagzähigkeit (mind. 28 kJ/m²), für die Kerbschlagzähigkeit (mind. 4.8 kJ/m²), die Reissdehnung (mind. 1.4 %), den Zugmodul (mind. 5000 MPa) und die Reissfestigkeit (mind. 70 MPa).

Eine speziell bevorzugte Formmasse weist die folgende Zusammensetzung auf:
(a) 32 bis 58 Gew.-% mindestens eines teilkristallinen aliphatischen Polyamids, insbesondere PA 66 oder PA 612,
(b) 4 bis 17 Gew.-% Kohlenstofffasern mit einem Faser-Durchmesser im Bereich von 2 bis 10 µm,
(c) 30 bis 45 Gew.-% mindestens eines partikelförmigen mineralischen oder salzartigen Füllstoffs,
(d) 8 bis 20 Gew.-% mindestens eines amorphen Polymers mit einer nach ISO 11357 bestimmten Glasübergangstemperatur von mindestens 45°C,
(e) 0 Gew.-% Russ
(f) 0 bis 5 Gew.-% mindestens eines weiteren Additivs und/oder Zusatzstoffs, wobei sich die Komponenten (a) bis (f) in ihrer Summe auf 100 Gew.-% ergänzen.

Erfindungsgemäss werden ebenso Polyamid-Formkörper bereitgestellt, die zumindest bereichsweise aus einer Polyamid-Formmasse, wie sie zuvor beschrieben wurde, herstellbar sind, z.B. durch Spritzgiessen. Bevorzugt sind diese Polyamid-Formkörper in Form von Bauteilen die einer elektrische Leitfähigkeit bedürfen, für Innen- und Aussenteile im Automobilsektor und im Bereich von anderen Transportmitteln, vorzugsweise für Tankdeckelabdeckungen, im Elektro- bzw. Elektronikbereich insbesondere für Teile eines Gehäuses oder Gehäusebestandteils für tragbare elektronische Geräte, Haushaltsgeräte, Haushaltsmaschinen, Geräte und Apparate für die Telekommunikation und Unterhaltungselektronik, bevorzugt Mobilfunktelefone, Innen- und Aussenteile vorzugsweise mit tragender mechanischer Funktion mit einer elektrischen Leitfähigkeit im Bereich Elektro, Möbel, Sport, Maschinenbau, Sanitär und Hygiene, Medizin, Energie und Antriebstechnik.

Weiterhin betrifft die Erfindung die Verwendung von partikelförmigen mineralischen oder salzartigen Füllstoffen zur Verringerung des spezifischen Oberflächen- und/oder des spezifischen Volumenwiderstands von kohlenstofffaserhaltigen Polyamid-Formmassen mit einem Kohlenstofffaser-Durchmesser im Bereich von 2 bis 10 µm.

Die vorliegende Erfindung wird anhand der nachfolgenden Beispiele, welche die Erfindung illustrieren, nicht aber den Erfindungsumfang einschränken sollen, näher dargestellt.

Die in Tabelle 1 aufgeführten Materialien wurden in den Beispielen und Vergleichsbeispielen eingesetzt.

**Tabelle 1: Eingesetzte Materialien.**

| Stoff | Handelsname | Hersteller | rel. Viskosität | H₂O-Gehalt [Gew.-%] |
|---|---|---|---|---|
| PA 66 A | RADIPOL A40 | Radici (IT) | 2.503^{a)} | 0.03 |
| PA 66 B | RADIPOL A45 | Radici (IT) | 2.736^{a)} | 0.025 |
| PA 612 | Grivory XE 1291 | EMS-GRIVORY (CH) | 1.820^{a)} | 0.02 |
| PA 6I/6T (2:1) (amorph, Tg =125°C^{c)}) | GRIVORY G21 | EMS-GRIVORY (CH) | 1.530^{b)} | 0.03 |
| Calciumcarbonat (mittlere Partikelgrösse d50, 3 µm) | Millicarb | Omya (DE) | - | - |
| Kohlenstofffaser | CF TENAX E-HT C604 6MM | Toho Tenax (DE) | - | - |
| Stabilisator | Irganox 1098 | BASF (CH) | - | - |
| Russ | Ketjenblack EC-600 JD | Akzo Nobel (NL) | - | - |
| Schlagzähmodifikator 1 | Bondyram 7103 | Polyram (IL) | - | - |
| Schlagzähmodifikator 2 | Bondyram 7107 | Polyram (IL) | - | - |
| Schlagzähmodifikator 3 | Bondyram TL4108N | Polyram (IL) | - | - |
| Polyphenylenether (amorph, Tg =200°C ^{c)}) | Bondyram 6008 (Blend von 49 Gew.-% PPE, 49 Gew.-% PA 66 und 2 Gew.-% MAH) | Polyram (IL) | - | - |

| | | | | |
|---|---|---|---|---|
| a) Bestimmt nach ISO 307 (1.0 g Polyamid gelöst in 100 ml H₂SO₄), Berechnung der relativen Viskosität (RV) nach RV = t/t₀ in Anlehnung an Abschnitt 11 der Norm; b) Bestimmt nach ISO 307 (0.5 g Polyamid gelöst in 100 ml m-Kresol), Berechnung der relativen Viskosität (RV) nach RV = t/t₀ in Anlehnung an Abschnitt 11 der Norm; c) Bestimmt nach ISO 11357. | | | | |

### Compoundierung

Generell werden zur Herstellung der Kunststoff-Formmasse die Komponenten auf üblichen Compoundiermaschinen, wie z.B. ein- oder zweiwelligen Extrudern oder Schneckenknetern, in der Polymerschmelze gemischt (compoundiert). Die Komponenten werden dabei einzeln in den Einzug dosiert oder in Form eines Dryblends zugeführt. Werden Zusatzstoffe (Additive) verwendet, können diese direkt oder in Form eines Masterbatches eingebracht werden. Bei einer Dryblend-Herstellung werden die getrockneten Polymer-Granulate und die Zusatzstoffe vermischt. Zur Vermeidung der Feuchtigkeitsaufnahme kann das Mischen unter getrocknetem Schutzgas erfolgen.

Die Compoundierung erfolgt bei eingestellten Extruder-Zylindertemperaturen von z.B. 230 °C bis 350 °C. Vor der Düse kann Vakuum angelegt oder atmosphärisch entgast werden. Die Schmelze wird in Strangform in ein Wasserbad ausgetragen und granuliert. Bevorzugt wird zum Granulieren eine Unterwassergranulierung oder ein Heissabschlag verwendet. Die somit bevorzugt in Granulatform erhaltene Kunststoff-Formmasse wird anschliessend getrocknet und kann nachher zu Formkörpern weiterverarbeitet werden.

Die Formmassen für die erfindungsgemässen Beispiele B1 bis B8 sowie für die Vergleichsbeispiele VB1 bis VB6 wurden auf einem Zweiwellenextruder der Fa. Werner und Pfleiderer hergestellt. Es wurden die in Tabelle 2 angegebenen Mengenanteile der Ausgangsstoffe in Gewichtsprozent (Gew.-%) bezogen auf 100 Gew.-% der gesamten Formmasse im Zweiwellenextruder compoundiert. Aus dem erhaltenen Granulat wurden Probekörper gespritzt, an denen die in Tabelle 3 angegebenen Eigenschaften bestimmt wurden.

### Normen zur Bestimmung der mechanischen Daten und der elektrischen Leitfähigkeitseigenschaften

Die in Tabelle 3 angegebenen mechanischen Daten und Leitfähigkeitseigenschaften (letztere ausgedrückt durch den elektrischen Widerstand, der sich umgekehrt proportional zur Leitfähigkeit verhält) wurden nach den folgenden Normen bestimmt.

### Zug-E-Modul:

ISO 527 mit einer Zuggeschwindigkeit von 1 mm/min
ISO-Zugstab, Norm: ISO 3167, Typ A, 170 x 20/10 x 4 mm, Temperatur 23 °C.

### Reissfestigkeit und Reissdehnung:

ISO 527 mit einer Zuggeschwindigkeit von 5 mm/min
ISO-Zugstab, Norm: ISO 3167, Typ A, 170 x 20/10 x 4 mm, Temperatur 23°C.

### Charpy-Schlagzähigkeit und Charpy-Kerbschlagzähigkeit:

ISO 179-2/1eU (Charpy-Schlagzähigkeit)
ISO-Schlagstab, Norm: ISO 179-1, Typ 1, 80 x 10 x 4 mm, Temperatur 23°C.

### Spezifischer (elektrischer) Volumenwiderstand:

### (auch spezifischer Durchgangswiderstand genannt, in [Ohm*m])

IEC 60093
Platten 100*100*2mm mit Leitsilber kontaktiert

### Spezifischer (elektrischer) Oberflächenwiderstand:

### (wegen der Elektrodenanordnung auch als Ω square bezeichnet, in [Ohm])

IEC 60093
Platten 100*100*2mm mit Leitsilber kontaktiert

### Glanzwerte:

Der Glanz wurde an Platten der Dimension 80x80x1mm mit einem Gerät des Typs Minolta Multi Gloss 268 unter einem Winkel von 85° und bei einer Temperatur von 23°C nach ISO 2813 bestimmt. Der Glanzwert wird in dimensionslosen Glanzeinheiten (GU, gloss units) angegeben.

### Versuche

In der nachfolgenden Tabelle 2 sind die Zusammensetzungen der Formmassen der durchgeführten Versuche (B = erfindungsgemässe Beispiele und VB = Vergleichsbeispiele) dargestellt.

Die Messergebnisse sind in Tabelle 3 zusammengestellt.

**Tabelle 2: Zusammensetzungen (in Gew.-%).**

| **Beispiele** | **B1** | **B2** | **B3** | **B4** | **B5** | **B6** | **B7** |
|---|---|---|---|---|---|---|---|
| PA 66 A | - | - | 37.25 | 26.07 | 31.0 | 31.0 | 31.0 |
| PA 66 B | - | 37.25 | - | - | - | - | - |
| PA 612 | 35.75 | - | - | - | - | - | - |
| PA 6I/6T (2:1) | 14.0 | 12.5 | 12.5 | 8.75 | 10.4 | 10.4 | 10.4 |
| Calciumcarbonat | 35.0 | 35.0 | 35.0 | 35.0 | 40.0 | 40.0 | 40.0 |
| Kohlenstofffaser | 15.0 | 15.0 | 15.0 | 15.0 | 5.0 | 5.0 | 5.0 |
| Stabilisator | 0.25 | 0.25 | 0.25 | 0.25 | 0.25 | 0.25 | 0.25 |
| Russ | - | - | - | - | 3.0 | 3.0 | 3.0 |
| Schlagzähmodifikator 1 | - | - | - | - | 10.35 | - | - |
| Schlagzähmodifikator 2 | - | - | - | - | - | 10.35 | - |
| Schlagzähmodifikator 3 | - | - | - | - | - | - | 10.35 |
| Polyphenylenether-Blend | - | - | - | 14.93 (7.32 PPE) | - | - | - |

| **Beispiele** | **B8** | **VB1** | **VB2** | **VB3** | **VB4** | **VB5** | **VB6** |
|---|---|---|---|---|---|---|---|
| PA 66 A | 34.82 | 31.0 | - | 37.3 | 63.5 | 52.275 | 44.75 |
| PA 6I/6T (2:1) | - | 10.4 | 34.82 | 12.52 | 21.25 | 17.545 | - |
| Calciumcarbonat | 35.0 | 40.0 | 35.0 | 35.0 | - | - | 35.0 |
| Kohlenstofffaser | 15.0 | - | 15.0 | - | 15.0 | 15.0 | 15.0 |
| Stabilisator | 0.25 | 0.25 | 0.25 | 0.25 | 0.25 | 0.25 | 0.25 |
| Russ | - | 8.0 | - | - | - | - | - |
| Schlagzähmodifikator 1 | - | 10.35 | - | - | - | - | 5 |
| Polyphenylenether-Blend | 14.93 (7.32 PPE) | - | 14.93 (7.32 PPE) | 14.93 (7.32 PPE) | - | 14.93 (7.32 PPE) | - |

**Tabelle 3: Messergebnisse.**

| **Beispiele** | **B1** | **B2** | **B3** | **B4** | **B5** | **B6** | **B7** |
|---|---|---|---|---|---|---|---|
| Spez. Volumenwiderstand [Ohm*m] | 3.9*10¹ | 2.7 | 4.5 | 4.0 | 1.8*10¹ | 2.3*10¹ | 2.7*10¹ |
| Spez. Oberflächenwiderstand [Ohm] | 7.5*10² | 1.2*10² | 1.8*10² | 1.6*10² | 2.7*10² | 3.8*10² | 6.6*10² |
| Glanz 85° | 93.3 | 94.5 | 84.2 | 93.5 | 89.7 | 90.9 | 80.9 |
| Schlagzähigkeit 23°C, trocken [kJ/m²] | 39.7 | 47.9 | 50.4 | 41.6 | 39.4 | 36.5 | 29.2 |
| Kerbschlagzähigkeit 23°C, trocken [kJ/m²] | 5.1 | 6.5 | 6.5 | 6.6 | 7.0 | 6.9 | 5.0 |
| Reissdehnung [%] | 1.6 | 1.8 | 1.9 | 1.5 | 3.2 | 3.3 | 2.4 |
| Zug-E-Modul [MPa] | 19500 | 18200 | 18600 | 18500 | 6000 | 5800 | 7100 |
| Reissfestigkeit [MPa] | 204 | 205 | 210 | 197 | 75 | 74 | 84 |

| **Beispiele** | **B8** | **VB1** | **VB2** | **VB3** | **VB4** | **VB5** | **VB6** |
|---|---|---|---|---|---|---|---|
| Spez. Volumenwiderstand [Ohm*m] | 2.8 | 2.5*10¹ | 1.1 | 8.3*10⁸ | 1.6*10⁴ | 4.1*10⁴ | 9.5 *10⁻¹ |
| Spez. Oberflächenwiderstand [Ohm] | 9.2*10¹ | 4.2*10² | 5.5*10¹ | 3.5*10¹⁰ | 1.3*10⁵ | 2.4*10⁶ | 5.0*10¹ |
| Glanz 85° | 92.6 | 48.3 | 79.8 | 90.7 | 79.1 | 80.7 | 67.5 |
| Schlagzähigkeit 23°C, trocken [kJ/m²] | 38.9 | 5 | 23.6 | 48.1 | 38.0 | 38.9 | 49.5 |
| Kerbschlagzähigkeit 23°C, trocken [kJ/m²] | 6.4 | 1.1 | 5.1 | 4.6 | 5.1 | 4.7 | 6.4 |
| Reissdehnung [%] | 1.5 | 0.3 | 1.3 | 1.6 | 3.9 | 4.1 | 1.0 |
| Zug-E-Modul [MPa] | 18900 | 250 | 19000 | 4400 | 11600 | 11100 | 16500 |
| Reissfestigkeit [MPa] | 195 | 17 | 187 | 62 | 170 | 160 | 129 |

Die Erfindungsbeispiele zeigen, dass durch eine Kombination der erfindungsgemässen Merkmale Polyamid-Formmassen erhalten werden, die überraschenderweise neben guten mechanischen Eigenschaften auch eine sehr gute elektrische Leitfähigkeit und sehr gute Oberflächeneigenschaften aufweisen. Als Mass für die Oberflächeneigenschaften wird der Glanz herangezogen. Vergleichsbeispiel VB1, welches anstatt der erfindungsgemässen Kohlenstofffasern lediglich Russ enthält, weist einen sehr niedrigen Glanzwert sowie sehr schlechte mechanischen Eigenschaften auf. Durch Weglassen der teilkristallinen Komponente wie in Vergleichsbeispiel VB2 werden der Glanz und die Schlagzähigkeit beeinträchtigt. Vergleichsbeispiel VB6 zeigt, dass sich der Glanz deutlich verschlechtert, wenn kein amorphes Polymer in der Formmasse enthalten ist. Die Vergleichsbeispiele VB3 bis VB5 demonstrieren eindrucksvoll, dass sowohl die Kohlenstofffaser als auch der partikelförmige Füllstoff notwendig sind, um eine sehr gute elektrische Leitfähigkeit zu erreichen, bzw. dass diese nicht erreicht wird, wenn eine von diesen beiden Komponenten fehlt. Die gemessenen spezifischen Widerstände, die sich invers zur elektrischen Leitfähigkeit verhalten, sind bei VB3, VB4 und VB5 um den Faktor 10³ bis 10⁸ höher als bei den erfindungsgemässen Beispielen. Beispiel B4 ist ein Beispiel für eine bevorzugte Ausführungsform, die sowohl ein amorphes Polyamid als auch einen Polyphenylenether enthält, d.h. bei welcher das mindestens eine amorphe Polymer (d) eine Mischung eines amorphen Polyamids mit einem Polyphenylenether darstellt. Die Beispiele B5 bis B7 zeigen, dass der Kohlenstofffaseranteil gesenkt werden kann, wenn man der Formmasse Russ zusetzt. Durch 5 Gew.-% Kohlenstofffasern und 3 Gew.-% Russ werden andererseits zum Teil bessere Leitfähigkeiten (geringere Widerstände) erhalten als durch 8 Gew.-% Russ (im Vergleich zu VB1). Das Beispiel B8 zeigt, dass auch dann sehr gute Glanzwerte erhalten werden, wenn die Formmasse als amorphes Polymer (d) statt eines amorphen Polyamids ein amorphes Nicht-Polyamid, wie beispielsweise einen Polyphenylenether, enthält.

Mit der vorliegenden Erfindung können somit vorteilhafte Polyamid-Formmassen zur Verfügung gestellt werden, welche in einer für den Fachmann unerwarteten Weise die Anforderungen nach hoher elektrischer Leitfähigkeit, glatter Oberfläche (hohem Glanz) und sehr guten mechanischen Eigenschaften gleichzeitig erfüllen. Daraus hergestellte Formkörper sind von hochwertiger Qualität, weisen ein ansprechendes Aussehen auf und sind unter anderem auch sehr gut für das elektrostatische Pulverlack-Beschichten sowie für die Elektrotauchlackierung (KTL-Verfahren) geeignet. Dass dies erfindungsgemäss mit Kohlenstofffasern im üblichen Durchmesserbereich (anstelle von Kohlenstoff-Nanoröhrchen) und bevorzugt auch ohne eine Polyphenylenether-Komponente erreicht werden kann, war für einen Fachmann in Anbetracht des Standes der Technik nicht vorauszusehen.

## Patentansprüche

1. Polyamid-Formmasse mit folgender Zusammensetzung:
(a) 20 bis 85 Gew.-% mindestens eines teilkristallinen Polyamids,
(b) 4 bis 18 Gew.-% Kohlenstofffasern mit einem Faser-Durchmesser im Bereich von 2 bis 10 µm,
(c) 10 bis 60 Gew.-% mindestens eines partikelförmigen mineralischen oder salzartigen Füllstoffs,
(d) 3 bis 30 Gew.-% mindestens eines amorphen Polymers mit einer nach ISO 11357 bestimmten Glasübergangstemperatur von mindestens 45°C; falls das mindestens eine amorphe Polymer Polyphenylenether umfasst, enthält die Polyamid-Formmasse 5 bis 9 Gew.-% Polyphenylenether,
(e) 0 bis 20 Gew.-% Russ,
(f) 0 bis 20 Gew.-% mindestens eines weiteren Additivs und/oder Zusatzstoffs,
wobei sich die Komponenten (a) bis (f) in ihrer Summe auf 100 Gew.-% ergänzen.

2. Polyamid-Formmasse gemäss Anspruch 1, **dadurch gekennzeichnet, dass** es sich beim teilkristallinen Polyamid (a) um ein aliphatisches oder ein teilaromatisches Polyamid handelt.

3. Polyamid-Formmasse gemäss Anspruch 1 oder 2, **dadurch gekennzeichnet, dass** das teilkristalline Polyamid (a) ausgewählt ist aus der Gruppe bestehend aus PA 46, PA 6, PA 66, PA 11, PA 12, PA 610, PA 1212, PA 1010, PA 10/11, PA 10/12, PA 11/12, PA 6/10, PA 6/12, PA 6/9, PA 8/10, PA 612, PA 614, PA 66/6, teilkristallinem PA 4T/4I, teilkristallinem PA 4T/6I, teilkristallinem PA 5T/5I, teilkristallinem PA 6T/6I, teilkristallinem PA 6T/6I/6, PA 6T/66, PA 6T/610, PA 10T/106, PA 6T/612, PA 6T/10T, teilkristallinem PA 6T/10I, PA 9T, PA 10T, PA 12T, teilkristallinem PA 10T/10I, PA10T/12, PA10T/11, PA 6T/9T, PA 6T/12T, teilkristallinem PA 6T/10T/6I, teilkristallinem PA 6T/6I/6, teilkristallinem PA 6T/6I/12, PA 10T/612, PA 10T/610, und/oder Gemische, Blends oder Legierungen aus diesen Polyamiden, wobei PA 66 und PA 612 bevorzugt sind.

4. Polyamid-Formmasse gemäss einem der vorhergehenden Ansprüche, **dadurch gekennzeichnet, dass** das mindestens eine teilkristalline Polyamid (a) zu 25 bis 50 Gew.-%, bevorzugt zu 27 bis 45 Gew.-% und besonders bevorzugt zu 30 bis 40 Gew.-% in der Polyamid-Formmasse enthalten ist.

5. Polyamid-Formmasse gemäss einem der vorhergehenden Ansprüche, **dadurch gekennzeichnet, dass** die Kohlenstofffasern (b) zu 5 bis 16 Gew.-% in der Polyamid-Formmasse enthalten sind.

6. Polyamid-Formmasse gemäss einem der vorhergehenden Ansprüche, **dadurch gekennzeichnet, dass** der partikelförmige mineralische oder salzartige Füllstoff (c) ausgewählt ist aus der Gruppe bestehend aus Calciumcarbonat, Magnesiumcarbonat, Dolomit, Calciumhydroxid, Magnesiumhydroxid, Calciumsulfat, Bariumsulfat, Baryt, Calciumsilikaten, Aluminiumsilikaten, Kaolin, Kreide, Glimmer, Schichtsilikaten, Talk, Ton, und/oder Mischungen dieser Füllstoffe, wobei Calciumcarbonat bevorzugt ist.

7. Polyamid-Formmasse gemäss einem der vorhergehenden Ansprüche, **dadurch gekennzeichnet, dass** der mindestens eine partikelförmige mineralische oder salzartige Füllstoff (c) zu 15 bis 55 Gew.-%, bevorzugt zu 20 bis 50 Gew.-% und besonders bevorzugt zu 35 bis 45 Gew.-% in der Polyamid-Formmasse enthalten ist.

8. Polyamid-Formmasse gemäss einem der vorhergehenden Ansprüche, **dadurch gekennzeichnet, dass** das mindestens eine amorphe Polymer (d) ausgewählt ist aus der Gruppe bestehend aus PA 6I, PA 10I, Copolyamiden 6I/6T mit einem Molverhältnis von Isophthalsäure zu Terephthalsäure zwischen 1:0 und 3:2, Copolyamiden 10I/10T mit einem Molverhältnis von Isophthalsäure zu Terephthalsäure zwischen 1:0 und 3:2, Polyphenylenether, insbesondere Poly(2,6-diethyl-1,4-phenylen)ether, Poly(2-methyl-6-ethyl-1,4-phenylen)ether, Poly(2-methyl-6-propyl-1,4-phenylen)ether, Poly(2,6-dipropyl-1,4-phenylen)ether, Poly(2-ethyl-6-propyl-1,4-phenylen)ether, Polyphenylenether-Copolymere die 2,3,6-Trimethylphenol enthalten, gepfropfte Varianten der vorangehend genannten Polyphenylenether, ausserdem Mischungen der genannten Polyphenylenether, und/oder Mischungen aus den genannten amorphen Polymeren, wobei ein Copolyamid 6I/6T mit einem Molverhältnis von Isophthalsäure zu Terephthalsäure von 2:1 bevorzugt ist.

9. Polyamid-Formmasse gemäss einem der vorhergehenden Ansprüche, **dadurch gekennzeichnet, dass** das mindestens eine amorphe Polymer (d) eine gemäss ISO 11357 bestimmte Glasübergangstemperatur von 50°C bis 280°C, bevorzugt von 60°C bis 250°C und besonders bevorzugt von 75°C bis 220°C aufweist.

10. Polyamid-Formmasse gemäss einem der vorhergehenden Ansprüche, **dadurch gekennzeichnet, dass** das mindestens eine amorphe Polymer (d) zu 5 bis 27 Gew.-%, bevorzugt zu 8 bis 20 Gew.-% und besonders bevorzugt zu 7 bis 17 Gew.-% in der Polyamid-Formmasse enthalten ist.

11. Polyamid-Formmasse gemäss einem der vorhergehenden Ansprüche, **dadurch gekennzeichnet, dass** der Russ (e) zu 1 bis 15 Gew.-%, bevorzugt zu 2 bis 12 Gew.-% und besonders bevorzugt zu 3 bis 8 Gew.-% in der Polyamid-Formmasse enthalten ist.

12. Polyamid-Formmasse gemäss einem der vorhergehenden Ansprüche, **dadurch gekennzeichnet, dass** das mindestens eine weitere Additiv und/oder der mindestens eine weitere Zusatzstoff (f) ausgewählt ist aus der Gruppe bestehend aus UV-Absorbern, UV-Stabilisatoren, Hitzestabilisatoren, Hydrolysestabilisatoren, Vernetzungsaktivatoren, Vernetzungsmitteln, Flammschutzmitteln, Farbmitteln, Haftvermittlern, Verträglichkeitsvermittlern, Gleitmitteln, Glasfasern, Gleit- und Entformungshilfsmitteln, anorganischen Pigmenten, organischen Pigmenten, IR-Absorbern, Antistatika, Antiblockmitteln, Nukleierungsmitteln, Kristallisationsbeschleunigern, Kristallisationsverzögerern, kettenverlängernden Additiven, optischen Aufhellern, photochromen Additiven, Schlagzähigkeitsmodifikatoren, wobei als Schlagzähigkeitsmodifikatoren Maleinsäureanhydridmodifizierte Olefin-Copolymere und/oder Mischungen davon bevorzugt sind.

13. Polyamid-Formmasse gemäss einem der vorhergehenden Ansprüche, **dadurch gekennzeichnet, dass** das weitere Additiv und/oder der weitere Zusatzstoff (f) zu 0.1 bis 15 Gew.-%, bevorzugt zu 0.2 bis 10 Gew.-% und besonders bevorzugt zu 0.25 bis 5 Gew.-% in der Polyamid-Formmasse enthalten ist.

14. Polyamid-Formkörper, welcher zumindest bereichsweise aus einer Polyamid-Formmasse nach einem der Ansprüche 1 bis 13 besteht, bevorzugt in Form von Bauteilen die einer elektrische Leitfähigkeit bedürfen, für Innen- und Aussenteile im Automobilsektor und im Bereich von anderen Transportmitteln, vorzugsweise für Tankdeckelabdeckungen, im Elektro- bzw. Elektronikbereich insbesondere für Teile eines Gehäuses oder Gehäusebestandteils für tragbare elektronische Geräte, Haushaltsgeräte, Haushaltsmaschinen, Geräte und Apparate für die Telekommunikation und Unterhaltungselektronik, bevorzugt Mobilfunktelefone, Innen- und Aussenteile vorzugsweise mit tragender mechanischer Funktion mit einer elektrischen Leitfähigkeit im Bereich Elektro, Möbel, Sport, Maschinenbau, Sanitär und Hygiene, Medizin, Energie und Antriebstechnik.

15. Verwendung von partikelförmigen mineralischen oder salzartigen Füllstoffen zur Verringerung des spezifischen Oberflächen- und/oder des spezifischen Volumenwiderstands von kohlenstofffaserhaltigen Polyamid-Formmassen mit einem Kohlenstofffaser-Durchmesser im Bereich von 2 bis 10 µm.

## Claims

1. Polyamide molding material, having the following composition:
(a) 20 to 85% by weight of at least one semi-crystalline polyamide,
(b) 4 to 18% by weight of carbon fibers having a fiber diameter in the range of 2 to 10 µm,
(c) 10 to 60% by weight of at least one particulate mineral or salt-like filler,
(d) 3 to 30% by weight of at least one amorphous polymer having a glass transition temperature of at least 45°C as determined according to ISO 11357; if the at least one amorphous polymer comprises polyphenylene ether, the polyamide molding material contains 5 to 9% by weight of polyphenylene ether,
(e) 0 to 20% by weight of carbon black,
(f) 0 to 20% by weight of at least one further additive and/or adjuvant, wherein the components (a) to (f) add up in total to 100% by weight.

2. Polyamide molding material according to claim 1, **characterized in that** the semi-crystalline polyamide (a) is an aliphatic or a partially aromatic polyamide.

3. Polyamide molding material according to claim 1 or 2, **characterized in that** the semi-crystalline polyamide (a) is selected from the group consisting of PA 46, PA 6, PA 66, PA 11, PA 12, PA 610, PA 1212, PA 1010, PA 10/11, PA 10/12, PA 11/12, PA 6/10, PA 6/12, PA 6/9, PA 8/10, PA 612, PA 614, PA 66/6, semi-crystalline PA 4T/4I, semi-crystalline PA 4T/6I, semi-crystalline PA 5T/5I, semi-crystalline PA 6T/6I, semi-crystalline PA 6T/6I/6, PA 6T/66, PA 6T/610, PA 10T/106, PA 6T/612, PA 6T/10T, semi-crystalline PA 6T/10I, PA 9T, PA 10T, PA 12T, semi-crystalline PA 10T/10I, PA10T/12, PA10T/11, PA 6T/9T, PA 6T/12T, semi-crystalline PA 6T/10T/6I, semi-crystalline PA 6T/6I/6, semi-crystalline PA 6T/6I/12, PA 10T/612, PA 10T/610, and/or mixtures, blends or alloys of these polyamides, wherein PA 66 and PA 612 are preferred.

4. Polyamide molding material according to one of the preceding claims, **characterized in that** the at least one semi-crystalline polyamide (a) is present in the polyamide molding material to the extent of 25 to 50% by weight, preferably 27 to 45% by weight and particularly preferably 30 to 40% by weight.

5. Polyamide molding material according to one of the preceding claims, **characterized in that** the carbon fibers (b) are contained to the extent of 5 to 16% by weight in the polyamide molding material.

6. Polyamide molding material according to one of the preceding claims, **characterized in that** the particulate mineral or salt-like filler (c) is selected from the group consisting of calcium carbonate, magnesium carbonate, dolomite, calcium hydroxide, magnesium hydroxide, calcium sulfate, barium sulfate, barite, calcium silicates, aluminum silicates, kaolin, chalk, mica, layered silicates, talc, clay and/or mixtures of these fillers, wherein calcium carbonate is preferred.

7. Polyamide molding material according to one of the preceding claims, **characterized in that** the at least one particulate mineral or salt-like filler (c) is present in the polyamide molding material to the extent of 15 to 55% by weight, preferably 20 to 50% by weight and particularly preferably 35 to 45% by weight.

8. Polyamide molding material according to one of the preceding claims, **characterized in that** the at least one amorphous polymer (d) is selected from the group consisting of PA 61, PA 10I, copolyamides 6I/6T with a molar ratio of isophthalic acid to terephthalic acid between 1:0 and 3:2, copolyamides 10I/10T with a molar ratio of isophthalic acid to terephthalic acid between 1:0 and 3:2, polyphenylene ether, in particular poly(2,6-diethyl-1,4-phenylene)ether, poly(2-methyl-6-ethyl-1,4-phenylene)ether, poly(2-methyl-6-propyl-1,4-phenylene)ether, poly(2,6-dipropyl-1,4-phenylene)ether, poly(2-ethyl-6-propyl-1,4-phenylene)ether, polyphenylene ether copolymers containing 2,3,6-trimethylphenol, grafted variants of the above-mentioned polyphenylene ethers, also mixtures of the above-mentioned polyphenylene ethers, and/or mixtures of the above-mentioned amorphous polymers, wherein a copolyamide 6I/6T having a molar ratio of isophthalic acid to terephthalic acid of 2:1 is preferred.

9. Polyamide molding material according to one of the preceding claims, **characterized in that** the at least one amorphous polymer (d) has a glass transition temperature, determined according to ISO 11357, of 50°C to 280°C, preferably of 60°C to 250°C and particularly preferably of 75°C to 220°C.

10. Polyamide molding material according to one of the preceding claims, **characterized in that** the at least one amorphous polymer (d) is contained in the polyamide molding material to the extent of 5 to 27% by weight, preferably 8 to 20% by weight and particularly preferably 7 to 17% by weight.

11. Polyamide molding material according to one of the preceding claims, **characterized in that** the carbon black (e) is present in the polyamide molding material to the extent of 1 to 15% by weight, preferably 2 to 12% by weight and particularly preferably 3 to 8% by weight.

12. Polyamide molding material according to one of the preceding claims, **characterized in that** the at least one further additive and/or the at least one further adjuvant (f) is selected from the group consisting of UV absorbers, UV stabilizers, heat stabilizers, hydrolysis stabilizers, crosslinking activators, crosslinking agents, flame retardants, colorants, adhesion promoters, compatibilizers, lubricants, glass fibers, sliding and mold-release agents, inorganic pigments, organic pigments, IR absorbers, antistatics, antiblocking agents, nucleating agents, crystallization accelerators, crystallization retarders, chain-extending additives, optical brighteners, photochromic additives, impact modifiers, wherein maleic anhydride-modified olefin copolymers and/or mixtures thereof are preferred as impact modifiers.

13. Polyamide molding material according to one of the preceding claims, **characterized in that** the further additive and/or the further adjuvant (f) is contained in the polyamide molding material to the extent of 0.1 to 15% by weight, preferably 0.2 to 10% by weight and particularly preferably 0.25 to 5% by weight.

14. Polyamide molded article, which consists at least in sections of a polyamide molding material according to one of claims 1 to 13, preferably in the form of components which require electrical conductivity, for inner and outer parts in the automotive sector and in the region of other means of transport, preferably for tank cap covers, in the electrical or electronic sector, in particular for parts of a housing or housing component for portable electronic devices, household appliances, household machines, devices and apparatuses for telecommunications and entertainment electronics, preferably mobile telephones, inner and outer parts, preferably with a load-bearing mechanical function having an electrical conductivity in the area of electrical applications, furniture, sports, mechanical engineering, sanitary and hygiene, medicine, energy and drive technology.

15. Use of particulate mineral or salt-like fillers for reducing the specific surface and/or volume resistance of carbon fiber-containing polyamide molding materials having a carbon fiber diameter in the range from 2 to 10 µm.

## Revendications

1. Matière à mouler en polyamide de composition suivante :
(a) de 20 à 85 % en poids d'au moins un polyamide partiellement cristallin,
(b) de 4 à 18 % en poids de fibres de carbone avec un diamètre de fibre dans la plage allant de 2 à 10 µm,
(c) de 10 à 60 % en poids d'au moins une matière de remplissage particulaire minérale ou saline,
(d) de 3 à 30 % en poids d'au moins un polymère amorphe avec une température de transition vitreuse déterminée suivant ISO 11357 d'au moins 45 °C ; dans le cas où le au moins un polymère amorphe comprend du polyphénylène éther, la matière à mouler en polyamide comprend de 5 à 9 % en poids de polyphénylène éther,
(e) de 0 à 20 % en poids de suie,
(f) de 0 à 20 % en poids d'au moins un autre additif et/ou adjuvant, les composants (a) à (f) se complétant à 100 % en poids.

2. Matière à mouler en polyamide selon la revendication 1, **caractérisée en ce que** le polyamide partiellement cristallin (a) est un polyamide aliphatique ou partiellement aromatique.

3. Matière à mouler en polyamide selon la revendication 1 ou 2, **caractérisée en ce que** le polyamide partiellement cristallin (a) est choisi à partir du groupe composé de PA 46, PA 6, PA 66, PA 11, PA 12, PA 610, PA 1212, PA 1010, PA 10/11, PA 10/12, PA 11/12, PA 6/10, PA 6/12, PA 6/9, PA 8/10, PA 612, PA 614, PA 66/6, PA 4T/4I partiellement cristallin, PA 4T/6I partiellement cristallin, PA 5T/5I partiellement cristallin, PA 6T/6I partiellement cristallin, PA 6T/6I/6 partiellement cristallin, PA 6T/66, PA 6T/610, PA 10T/106, PA 6T/612, PA 6T/10T, PA 6T/10I partiellement cristallin, PA 9T, PA 10T, PA 12T, PA 10T/10I partiellement cristallin, PA1 0T/12, PA10T/11, PA 6T/9T, PA 6T/12T, PA 6T/10T/6I partiellement cristallin, PA 6T/6I/6 partiellement cristallin, PA 6T/6I/12 partiellement cristallin, PA 10T/612, PA 10T/610 et/ou des mélanges ou des alliages de ces polyamides, PA 66 et PA 612 étant préférés.

4. Matière à mouler en polyamide selon l'une des revendications précédentes, **caractérisée en ce que** le au moins un polyamide partiellement cristallin (a) est présent dans la matière à mouler en polyamide de 25 à 50 % en poids, de préférence de 27 à 45 % en poids, et de façon particulièrement préférée de 30 à 40 % en poids.

5. Matière à mouler en polyamide selon l'une des revendications précédentes, **caractérisée en ce que** les fibres de carbone (b) sont présentes dans la matière à mouler en polyamide de 5 à 16 % en poids.

6. Matière à mouler en polyamide selon l'une des revendications précédentes, **caractérisée en ce que** la matière de remplissage particulaire minérale ou saline (c) est choisie à partir du groupe composé de carbonate de calcium, carbonate de magnésium, dolomite, hydroxyde de calcium, hydroxyde de magnésium, sulfate de calcium, sulfate de baryum, barytine, silicates de calcium, silicates d'aluminium, kaolin, craie, mica, silicates lamellaires, talc, argile et/ou des mélanges de ces matières de remplissage, le carbonate de calcium étant préféré.

7. Matière à mouler en polyamide selon l'une des revendications précédentes, **caractérisée en ce que** la au moins une matière de remplissage particulaire minérale ou saline (c) est présente dans la matière à mouler en polyamide de 15 à 55 % en poids, de préférence de 20 à 50 % en poids, et de façon particulièrement préférée de 35 à 45 % en poids.

8. Matière à mouler en polyamide selon l'une des revendications précédentes, **caractérisée en ce que** le au moins un polymère amorphe (d) est choisi à partir du groupe composé de PA 6I, PA 10I, copolyamides 6I/6T avec un rapport molaire acide isophtalique/acide téréphtalique compris entre 1:0 et 3:2, copolyamides 10I/10T avec un rapport molaire acide isophtalique/acide téréphtalique compris entre 1:0 et 3:2, polyphénylène éther, en particulier Poly(2,6-diéthyl-1,4-phénylène)éther, Poly(2-méthyl-6-éthyl-1,4-phénylène)éther, Poly(2-méthyl-6-propyl-1,4-phénylène)éther, Poly(2,6-dipropyl-1,4-phénylène)éther, Poly(2-éthyl-6-propyl-1,4-phénylène)éther, copolymères de polyphénylène éther qui contiennent du 2,3,6-triméthylphénol, des variantes greffées des polyphénylène éthers susmentionnés, ainsi que des mélanges des polyphénylène éthers mentionnées et/ou des mélanges des polymères amorphes mentionnés, un copolyamide 6I/6T avec un rapport molaire acide isophtalique/acide téréphtalique de 2:1 étant préféré.

9. Matière à mouler en polyamide selon l'une des revendications précédentes, **caractérisée en ce que** le au moins un polymère amorphe (d) présente une température de transition vitreuse déterminée selon ISO 11357 dans l'étendue de 50 °C à 280 °C, de préférence de 60 °C à 250 °C, et de façon particulièrement préférée de 75 °C à 220 °C.

10. Matière à mouler en polyamide selon l'une des revendications précédentes, **caractérisée en ce que** le au moins un polymère amorphe (d) est présent dans la matière à mouler en polyamide de 5 à 27 % en poids, de préférence de 8 à 20 % en poids, et de façon particulièrement préférée de 7 à 17 % en poids.

11. Matière à mouler en polyamide selon l'une des revendications précédentes, **caractérisée en ce que** la suie (e) est présente dans la matière à mouler en polyamide de 1 à 15 % en poids, de préférence de 2 à 12 % en poids, et de façon particulièrement préférée de 3 à 8 % en poids.

12. Matière à mouler en polyamide selon l'une des revendications précédentes, **caractérisée en ce que** le au moins un autre additif et/ou le au moins un autre adjuvant (f) est choisi à partir du groupe composé d'absorbeurs UV, stabilisateurs UV, stabilisateurs thermiques, stabilisateurs d'hydrolyse, activateurs de réticulation, agents de réticulation, retardateurs de flamme, colorants, agents adhésifs, agents de compatibilité, lubrifiants, fibres de verre, aides au glissement et au démoulage, pigments inorganiques, pigments organiques, absorbeurs infrarouges, agents antistatiques, agents anti-bloquants, agents de nucléation, accélérateurs de cristallisation, retardateurs de cristallisation, additifs allongeant la chaîne, azurants optiques, additifs photochromiques, agents modifiant la résistance au choc, dans laquelle il est préféré comme agents modifiant la résistance au choc des copolymères oléfine modifiée par anhydride maléique et/ou des mélanges de telles copolymères.

13. Matière à mouler en polyamide selon l'une des revendications précédentes, **caractérisée en ce que** l'autre additif et/ou l'autre adjuvant (f) est présent dans la matière à mouler en polyamide de 0,1 à 15 % en poids, de préférence de 0,2 à 10 % en poids, et de façon particulièrement préférée de 0,25 à 5 % en poids.

14. Corps moulé en polyamide constitué au moins en partie d'une matière à mouler en polyamide selon l'une des revendications 1 à 13, de préférence sous forme de composants qui nécessitent une conductivité électrique, pour des pièces intérieures et extérieures dans le secteur automobile et dans le domaine d'autres moyens de transport, de préférence pour des trappes à essence, dans le domaine électrique et électronique en particulier pour des pièces d'un boîtier ou composants de boîtier pour des appareils électroniques portatifs, électroménagers, appareils ménagers, appareils pour les télécommunications et l'électronique grand public, de préférence des téléphones mobiles, des pièces intérieures et extérieures de préférence avec une fonction mécanique portante avec une conductivité électrique dans le domaine de l'électronique, des meubles, du sport, du génie mécanique, du sanitaire et de l'hygiène, de la médecine, de l'énergie et de la technique de transmission.

15. Utilisation de matières de remplissage particulaires minérales ou salines pour réduire la résistivité de surface et/ou de volume de matières à former en polyamide contenant des fibres de carbone avec un diamètre de fibre de carbone dans la plage allant de 2 à 10 µm.
